(19) Europäisches Patentamt
European Patent Office
Office européen des brevets

(11) Veröffentlichungsnummer: **0 013 722**
**B1**

(12) **EUROPÄISCHE PATENTSCHRIFT**

(45) Veröffentlichungstag der Patentschrift: **21.07.82**

(51) Int. Cl.³: **C 08 F 2/00**, C 08 F 4/00// C08F283/00

(21) Anmeldenummer: **79104943.0**

(22) Anmeldetag: **05.12.79**

(54) **Radikalisches Polymerisationsverfahren und polymerisierbare Mischungen mit substituierter Weinsäure bzw. Weinsäurederivate als Initiatoren.**

(30) Priorität: **14.12.78 DE 2853938**

(43) Veröffentlichungstag der Anmeldung: **06.08.80 (Patentblatt 80/16)**

(45) Bekanntmachung des Hinweises auf die Patenterteilung: **21.07.82 Patentblatt 82/29**

(84) Benannte Vertragsstaaten: **AT CH DE FR GB IT NL**

(56) Entgegenhaltungen:
**FR - A - 1 385 958**

**INDUSTRIAL AND ENGINEERING CHEMISTRY, Band 10, Nr. 4, Dezember 1971, D. BRAUN et al.: « Aromatic pinacols as polymerization initiators »**

(73) Patentinhaber: **BAYER AG**
**Zentralbereich Patente, Marken und Lizenzen**
**D-5090 Leverkusen 1, Bayerwerk (DE)**

(72) Erfinder: **Wolfers, Heinrich, Dr.**
**Niederend 6**
**D-4137 Rheurdt (DE)**
Erfinder: **Mayer, Wolfram, Dr.**
**Mozartstrasse 10**
**D-4150 Krefeld (DE)**
Erfinder: **Rudolph, Hans, Dr.**
**Haydnstrasse 9**
**D-4150 Krefeld (DE)**
Erfinder: **Mietzsch, Fritz, Dr.**
**Isidor-Caro-Strasse 58**
**D-5000 Koeln 80 (DE)**

**EP 0 013 722 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Radikalisches Polymerisationsverfahren und polymerisierbare Mischungen mit substituierter Weinsäure bzw. Weinsäurederivate als Initiatoren.

Die Erfindung betrifft radikalische Polymerisationen in Gegenwart von substituierten Weinsäuren, Weinsäureestern oder Weinsäurenitrilen als Initiatoren.

Aus den DE-AS 1 216 877 und 1 219 224 sowie aus den DE-OS 2 131 623, 2 164 482, 2 615 039 und 2 632 294 ist bekannt, daß sich 1,1,2,2-Tetraaryl-1,2-dihydroxyäthane, ihre Alkyl- und Silyläther als Initiatoren für radikalische Polymerisationen eignen. Sie sind — im Gegensatz zu den bekannten Peroxidkatalysatoren — völlig gefahrlos zu handhaben. Die Härtung radikalisch polymerisierbarer Substanzen in Gegenwart dieser Initiatoren kann durch Temperaturführung leicht und sicher gesteuert werden.

Auch 1,2-Diphenyl-1,2-dihydroxyäthane werden beschrieben. Diese starten die Polymerisation ungesättigter Verbindungen aber erst bei deutlich höheren Temperaturen als die entsprechenden 1,1,2,2-Tetraphenyl-1,2-dihydroxyäthane. 1,2-Äthandiole, die nur aliphatische Reste tragen, zeigen eine derma-ßen verringerte Spaltungstendenz, daß sie unter den Polymerisationsbedingungen, wie sie üblicherweise bei radikalischen Polymerisationen eingehalten werden ($T < 200\,°C$), nicht zur Bildung von Radikalen neigen. Sie sind somit zur Initiierung radikalischer Polymerisationsreaktionen nicht geeignet.

Überraschenderweise wurde aber nun gefunden, daß substituierte Weinsäuren bzw. substituierte Weinsäurederivate der Formel (A) hochreaktive Initiatoren für die Auslösung radikalischer Polymerisationen bzw. Härtungen darstellen.

Gegenstand der vorliegenden Erfindung ist daher ein Verfahren zur radikalischen Polymerisation bzw. Härtung von ein- oder mehrfach ungesättigten Verbindungen oder Gemischen, dadurch gekennzeichnet, daß als Initiatoren substituierte Weinsäuren bzw. Weinsäurederivate der Formel (A) verwendet werden :

$$R^1 - \underset{X}{\overset{OH}{C}} - \underset{X}{\overset{OH}{C}} - R^2 \qquad (A)$$

worin

$R^1$ und $R^2$ gleich oder verschieden, für einen gegebenenfalls substituierten Alkylrest mit 1-10 C-Atomen (vorzugsweise Methyl, Äthyl, Isopropyl, t-Butyl, Isobutyl, n-Butyl, Hexyl, Octyl), einen Cycloalkylrest mit 5-7 C-Atomen (vorzugsweise Cyclopentyl, Cyclohexyl), einen Aralkylrest mit 7-10 C-Atomen (vorzugsweise Benzyl) oder einen Arylrest mit 6-10 C-Atomen (vorzugsweise Phenyl, Tolyl, Chlorphenyl, Dichlorphenyl, Naphthyl, Biphenylyl, t-Butylphenyl) und

X für eine Carboxyl-, Cyano- oder Carboxylester-gruppe stehen, in der sich die alkoholische Komponente des Esters von einem gegebenenfalls substituierten aliphatischen Alkohol mit 1-18 C-Atomen (vorzugsweise Methyl-, Äthyl-, Isopropyl-, Butyl-, Hexyl-, Octyl-, Lauryl-, Stearyl), cycloaliphatischen Alkohol mit 5-7 C-Atomen (vorzugsweise Cyclohexylalkohol), araliphatischen Alkohol mit 7-10 C-Atomen (vorzugsweise Benzyl- oder ß-Phenyläthyl-alkohol), einem Phenol mit 6-10 C-Atomen (vorzugsweise Phenol, Kresol, Chlorphenol, Naphthol) oder einem Silanol mit 3-18 C-Atomen (vorzugsweise Trimethylsilanol, Triäthylsilanol, Triphenylsilanol) ableitet.

Als Substituenten der genannten Reste kommen in Frage : Alkylreste mit 1-6 C-Atomen (vorzugsweise Methyl, Äthyl, Isopropyl, Butyl, Hexyl), Cycloalkylgruppen mit 1-7 C-Atomen (vorzugsweise Cyclohexyl), Aralkylrest mit 7-10 C-Atomen (vorzugsweise Benzyl), Arylrest mit 6-10 C-Atomen (vorzugsweise Phenyl), Alkoxygruppen mit 1-6 C-Atomen (vorzugsweise Methoxy, Äthoxy), Phenoxy-gruppen, Fluor, Chlor, Hydroxy und Thioalkylgruppen mit 1-4 C-Atomen.

Die Herstellung der erfindungsgemäß zu verwendenden Initiatoren kann nach aus der Literatur bekannten Methoden erfolgen (s. A.P. Tomilov, E.A. Mordvinceva, Z. Prikl. Chim. *41* (1968), 11, 2524 ; E.S. Huyser, D.C. Neckers, J. Org. Chem. *29* (1964), 2, 276 ; S.A. Barker, J.S. Brimacombe, J. Chem. Soc. *1963*, (11, 5117) ; N. Zinin, Annalen der Chemie 34, 189 ; O. Jacoby, Ber. der dt. Chem. Ges. *19*, 1519). Außerdem lassen sich substituierte Weinsäureester durch Reduktion der entsprechend substituierten α-Ketocarbonsäureester mit unedlen Metallen unter Zusatz von Halogenen oder organischen Halogenverbindungen darstellen. Analoge Verfahren zur Herstellung von Pinakolen aus den entsprechenden Ketonen sind bekannt (Gomberg, J. Amer. Chem. Soc. *55*, 1181 (1933), M.D. Rausch, W.E. Evans, Chem. Rev. *57*, 424). Ausgangsprodukte für die Herstellung der erfindungsgemäßen Initiatoren sind also im allgemeinen α-Ketocarbonsäuren bzw. α-Keto-carbonsäureester. Diese sind nach den bekannten Methoden, z.B. durch Oxydation von α-Hydroxy-carbonsäure (derivaten) oder durch Hydrolyse von Acylcyaniden auch technisch sehr gut zugänglich. Dabei können die Eigenschaften der Ester, z.B. Löslichkeit, Viskosität, Schmelzpunkt, Reaktivität durch Wahl geeigneter Alkohole in weiten Bereichen variiert werden. Für die Synthese der erfindungsgemäß zu verwendenden Initiatoren bietet sich somit eine große Zahl leicht zugänglicher, unterschiedlicher Ausgangsprodukte an. Für den Fachmann ist es deshalb nicht schwer, Initiatoren mit speziellen Eigenschaften, z.B. in Bezug auf Löslichkeit, Viskosität, Schmelzpunkt

usw. herzustellen.

Als bevorzugte Beispiele für die erfindungsgemäß zu verwendenden Initiatoren seien folgende Verbindungen genannt :

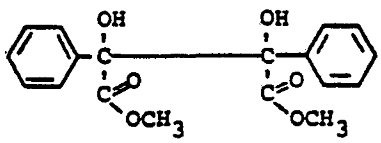
(I)

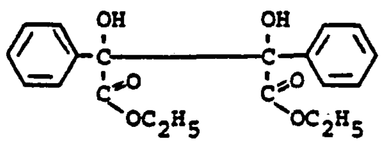
(II)

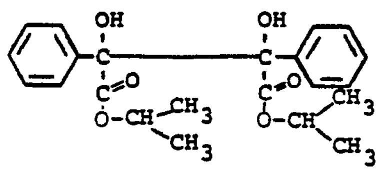
(III)

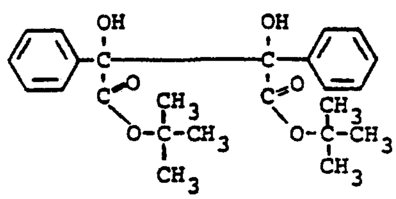
(IV)

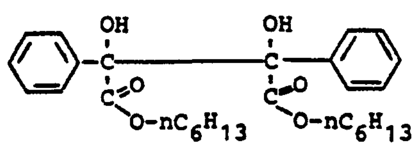
(V)

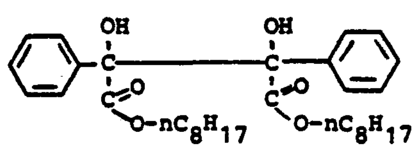
(VI)

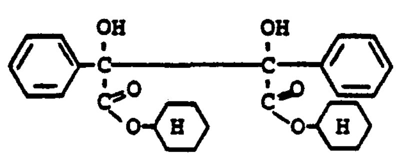
(VII)

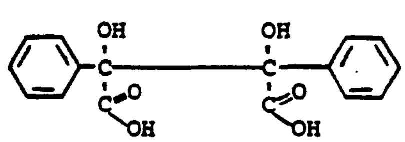
(VIII)

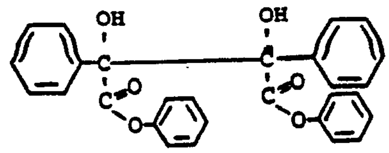

(IX)

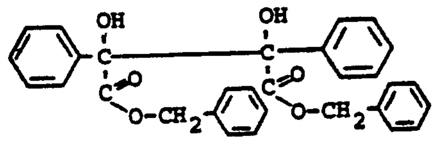

(X)

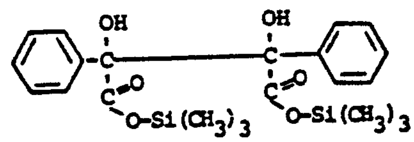

(XI)

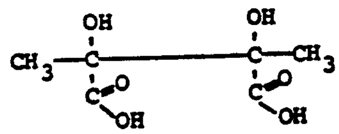

(XII)

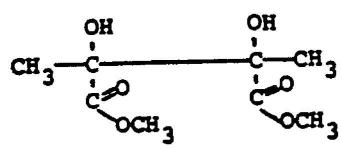

(XIII)

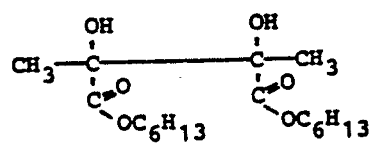

(XIV)

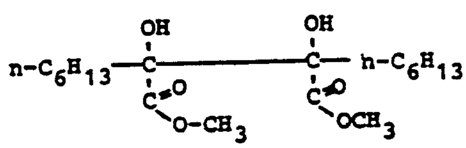

(XV)

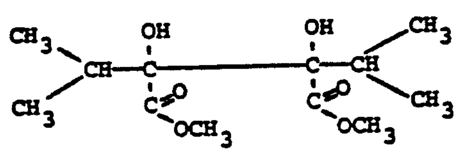

(XVI)

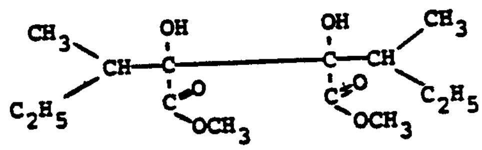

(XVII)

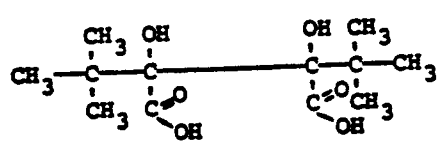

(XVIII)

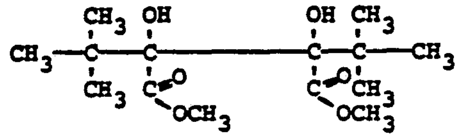

(XIX)

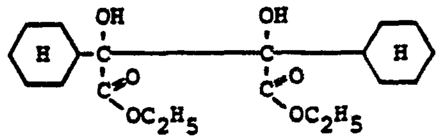

(XX)

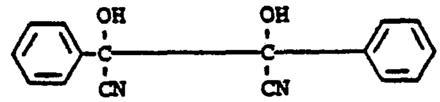

(XXI)

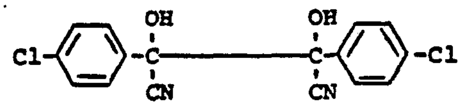

(XXII)

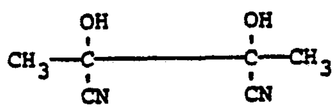

(XXIII)

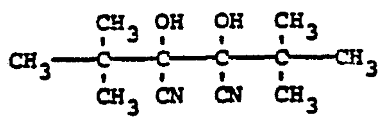

(XXIV)

Die Konzentration der erfindungsgemäß zu verwendenden Initiatoren liegt im allgemeinen im Bereich von 0,05-2 Gew.-%, bezogen auf die ein- oder mehrfach ungesättigten Verbindungen. Für die radikalische Polymerisation werden vorzugsweise 0,05-2, besonders bevorzugt 0,1-1,0 Gew.-%, bezogen auf die zu polymerisierenden Monomeren, für die Härtung vorzugsweise 0,3-2,0 Gew.-%, bezogen auf die zu härtenden Verbindungen eingesetzt.

Ein weiterer Gegenstand der Erfindung sind deshalb Mischungen bestehend aus radikalisch polymerisierbaren einfach oder mehrfach ungesättigten Verbindungen oder Gemischen und Polymerisationsinitiatoren, dadurch gekennzeichnet, daß die Mischungen 0,05-2 Gew.-%, bezogen auf die ungesättigten Verbindungen, substituierte Weinsäuren bzw. Weinsäurederivate der Formel (A) enthalten.

Es ist möglich, durch eine einfache Farbreaktion die Zerfallstemperaturen der erfindungsgemäß zu verwendenden Initiatoren festzustellen : Die bei der thermischen Zersetzung entstehenden Radikale können nämlich chinoide Farbstoffe entfärben. Zur Durchführung des Tests löst man eine geringe Menge (z.B. 1 mg) chinoiden Farbstoffs, z.B. Methylenblau, Thionin oder Neutralrot, in einem Lösungsmittel (z.B. 1 ml), das frei von molekularem Sauerstoff ist, z.B Glykol, Xylol, und setzt eine mindestens äquivalente Menge (z.B. 0,1 g) der erfindungsgemäß zu verwendenden Initiatoren zu. Die Temperatur, bei der der Farbstoff entfärbt wird, ist die Anspringtemperatur der Initiator-Reaktionsmischung.

Dementsprechend wird der Beginn der Polymerisationsreaktion durch Erhitzen der zu polymerisierenden Substanz über die Anspringtemperatur erreicht. Die Härtung radikalisch polymerisierbarer Systeme erfolgt in der Regel zwischen 20 und 200 °C.

Die Härtung kann in einem Zuge, falls erwünscht aber auch stufenweise erfolgen (vgl. GB-PS 1 041 641).

Der Zerfall der erfindungsgemäß zu verwendenden Initiatoren erfolgt nicht exotherm. Es ist deshalb möglich, diese Initiatoren auch als reaktive Phlegmatisierungsmittel für peroxidische Initiatoren zu verwenden..

Als Substanzen, deren Polymerisation durch die erfindungsgemäß zu verwendenden Initiatoren ausgelöst werden kann, kommen alle radikalisch polymerisierbaren Monomere oder Gemische in Betracht, wie α,β-äthylenisch ungesättigte Monomere wie z.B. α-Olefine, vorzugsweise Styrol, Äthylen, Divinyl-benzol ; weitere Vinylverbindungen wie Vinylchlorid, Vinylidenchlorid ; Vinylester, insbesondere

Vinylacetat oder Vinylpropionat, Vinyläther wie Vinylpropyläther, Vinyl-isobutyläther ; Acrylsäure und Methacrylsäure und deren Derivate wie Ester, insbesondere mit aliphatischen Alkoholen mit 1 bis 5 C-Atomen, Nitrile, Amide usw. ; Di(vinylphenyl) carbonate, Polyol-poly(meth) acrylate ; N,N'-Methylen-bis-(meth)acrylamid, Allylverbindungen insbesondere Diallylphthalat, Diallylcarbonat, Diallylfumarat ; Di(allylphenyl)-carbonate und konjugierte Diene, insbesondere Butadien, Isopren, Chloropren.

Die radikalischen Polymerisationen der ungesättigten Monomeren mit den erfindungsgemäß zu verwendenden Initiatoren können in Masse, in homogener Lösung oder in heterogener Phase als Emulsions-, Perl-, Suspensions- oder Fällungspolymerisation durchgeführt werden (Houben-Weyl, Bd 14/1, Georg Thieme Verlag 1961 S. 133 ff). Als Lösungsmittel bei Polymerisationen in homogener Phase eignen sich Kohlenwasserstoffe wie z.B. Cyclohexan, Toluol, Xylol und Benzinfraktionen, Ester wie z.B. Äthylacetat oder Butylacetat, Alkohole wie z.B. tert.-Butanol, Äthanol, Isopropanol, Nitrile wie z.B. Acetonitril und andere Lösungsmittel, die unter den Polymerisationsbedingungen nicht mit den Monomeren oder Initiatoren reagieren. Die Verfahren zur Polymerisation in heterogener Phase werden in der genannten Literatur (Houben-Weyl, Bd. 14/1, S. 133 ff) ausführlich beschrieben.

Besonders bevorzugt sind die erfindungsgemäß zu verwendenden Initiatoren zur Härtung ungesättigter Polyesterharze, d.h. die Lösungen α,β-äthylenisch ungesättigter Polyester in damit copolymerisierbaren Monomeren.

Die Initiatoren zerfallen in Abhängigkeit von Substituenten bei unterschiedlichen Temperaturen. So lösen z.B. die Diphenylweinsäuren Polymerisationen schon bei Raumtemperatur aus und sind somit geeignete Initiatoren zur Kalthärtung ungesättigter Polyesterharze, während die Diphenylweinsäureester unter gleichen Bedingungen mehrere Tage im Harz lagerstabil sind und erst bei mindestens 60 °C in ausreichend kurzer Zeit die Härtung ungesättigter Polyesterharze ermöglichen. Bei Verwendung von 1,2-Dimethylweinsäureestern ist es sogar möglich, ungesättigte Polyesterharze mehrere Stunden bei 80-100 °C zu lagern, ohne daß Gelierung erfolgt. Die Härtung eines ungesättigten Polyesterharzes in Gegenwart eines 1,2-Dimethylweinsäureesters erfolgt erst dann mit ausreichender Geschwindigkeit, wenn das ungesättigte Polyesterharz längere Zeit auf Temperaturen über 120 °C erhitzt wird.

Überraschenderweise wurde ferner bei Untersuchungen von ungesättigten Polyesterharzen, die mit den erfindungsgemäß zu verwenden den Initiatoren heiß gehärtet worden waren, festgestellt, daß die Restmonomergehalte niedriger waren als bei Verwendung vergleichbarer, bekannter Initiatoren vom Dibenzyltyp.

Ungesättigte Polyester sind die üblichen Polykondensationsprodukte mindestens einer α,β-äthylenisch ungesättigten Dicarbonsäure mit in der Regel 4 oder 5 C-Atomen oder deren esterbildenden Derivate, z.B. ihren Anhydriden, gegebenenfalls in Abmischung mit bis zu 200 Mol-%, bezogen auf die ungesättigten Säurekomponenten, mindestens einer aliphatischen gesättigten mit 4-10 C-Atomen oder einer cycloaliphatischen oder aromatischen Dicarbonsäure mit 8-10 C-Atomen oder deren esterbildenden Derivate mit mindestens einer Polyhydroxyverbindung, insbesondere Dihydroxyverbindung mit 2-8 C-Atomen — also Polyester, wie sie bei J. Björksten et al., « Polyesters and their Applications », Reinhold Publishing Corp., New York 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z.B. jedoch auch Mesaconsäure, Citraconsäure, Itaconsäure oder Chlormaleinsäure. Beispiele für die zu verwendenden aliphatischen gesättigten, cyclo-aliphatischen und aromatischen Dicarbonsäuren oder ihre Derivate sind Phthalsäure oder Phthalsäureanhydrid, Isophthalsäure, Terephthalsäure, Hexa- oder Tetrahydrophthalsäure bzw. deren Anhydride, Endomethylentetrahydrophtalsäure oder deren Anhydride, Bernsteinsäure bzw. Bernsteinsäureanhydrid und Bernsteinsäureester und -chloride, Adipinsäure, Sebacinsäure. Um schwerentflammbare Harze herzustellen, können z.B. Hexachlorendomethylentetrahydrophthalsäure, Tetrachlorphthalsäure oder Tetrabromphthalsäure verwendet werden. Als zweiwertige Alkohole können Äthylglykol, Propandiol-1,2, Propandiol-1,3, Diäthylenglykol, Dipropylenglykol, Butandiol-1,3, Butandiol-1,4, Neopentylglykol, Hexandiol-1,6, 2,2-Bis(4-hydroxycyclohexyl)-propan, bis-oxalkyliertes Bisphenol A, Perhydrobisphenol und andere eingesetzt werden. Bevorzugt verwendet werden Äthylenglykol, Propandiol-1,2, Diäthylenglykol und Dipropylenglykol.

Weitere Modifikationen sind möglich durch Einbau ein-, drei- und vierwertiger Alkohole mit 1-6 C-Atomen, wie Methanol, Äthanol, Butanol, Allylalkohol, Benzylalkohol, Cyclohexanol und Tetrahydrofurfurylalkohol, Trimethylpropan, Glycerin und Pentaerythrit sowie von Mono-, Di- und Triallyläthern und Benzyläthern drei- und mehrwertiger Alkohole mit 3-6 C-Atomen gemäß DE-AS 1 024 654, sowie durch Einbau einbasischer Säuren wie Benzoesäure, oder langkettiger ungesättigter Fettsäuren wie Ölsäure, Leinölfettsäure und Ricinenfettsäure.

Die Säurezahlen der Polyester liegen gewöhnlich zwischen 1 und 100, vorzugsweise zwischen 20 und 70, die OH-Zahlen zwischen 10 und 150, vorzugsweise zwischen 20 und 100, und die als Zahlenmittel bestimmten Molekulargewichte $\overline{M}_n$ zwischen ca. 500 und 5 000, vorzugsweise zwischen ca. 1 000 und 3 000 (dampfdruckosmometrisch gemessen in Dioxan und Aceton ; bei differierenden Werten wird der niedrigere als der korrekte angesehen).

Als mit den ungesättigten Polyestern copolymerisierbare Vinyl- und Vinylidenverbindungen eignen sich in der Polyestertechnologie gebräuchliche ungesättigte Verbindungen, die bevorzugt α-substituierte Vinylgruppen oder β-substituierte Allygruppen tragen, bevorzugt Styrol ; aber auch beispielsweise

kernchlorierte und -alkylierte bzw. -alkenylierte Styrole, wobei die Alkylgruppen 1-4 Kohlenstoffatome enthalten, können, z.B. Vinyltoluol, Divinylbenzol, α-Methylstyrol, tert.-Butylstyrol, Chlorstyrole ; Vinylester von Carbonsäuren mit 2-6 Kohlenstoffatomen, bevorzugt Vinylacetat ; Vinylpyridin, Vinylnaphthalin, Vinylcyclohexan, Acrylsäure und Methacrylsäure und/oder ihre Ester (vorzugsweise Vinyl-, Allyl- und Methallylester) mit 1-4 Kohlenstoffatomen in der Alkoholkomponente, ihre Amide und Nitrile, Maleinsäureanhydrid, -halb- und -diester mit 1-4 Kohlenstoffatomen in der Alkoholkomponente, -halb- und -diamide oder cyclische Imide wie N-Methylmaleinimid oder N-Cyclohexylmaleinimid ; Allylverbindungen wie Allylbenzol und Allylester wie Allylacetat, Phthalsäurediallylester, Isophthalsäurediallylester, Fumarsäurediallylester, Allylcarbonate, Diallylcarbonate, Triallylphosphat und Triallylcyanurat. Vorzugsweise werden 30-80 Gew.-%, bezogen auf die Gesamtmischung, des ungesättigten Polyesters mit 20-70 Gew.%, bezogen auf die Gesamtmischung, copolymerisierbaren Monomeren abgemischt. Im folgenden angegebene Teile sinf Gewichtsteile, Prozentangaben erfolgen als Gewichtsprozente.

Beispiel 1

Zu 150 g einer 40 %igen Lösung von Styrol in 1,2-Dichloräthan werden jeweils 0,2 g eines der in der nachfolgenden Tabelle 1 angegebenen Initiators gegeben.

Jede Probe wird 4 Stunden unter Rückfluß gekocht, dann mit 0,5 ml einer 1 %igen Lösung von Benzochinon in Äthylacetat versetzt und anschließend bei 35 °C Badtemperatur am Rotationsverdampfer eingeengt. Die Badtemperatur wird langsam auf 60 °C bei 14 Torr gesteigert und dann für 4 Stunden auf 95 °C eingestellt. Evtl. noch vorhandene Restmonomere werden durch Tempern des Polymerisats bis zur Gewichtskonstanz im Vakuumtrockenschrank bei 140 °C entfernt. Das als Rückstand verbleibende Polystyrol wird ausgewogen. (60 g = 100 % Umsatz).

Folgende Initiatoren der auf den Seiten 6-10 aufgeführten Beispiele wurden untersucht :

Tabelle I

| Initiator | Polystyrol | Umsatz (% d. Th.) |
|---|---|---|
| — | 0,2 | 0,3 |
| I | 12,6 | 21 |
| II | 11,6 | 19 |
| III | 9,4 | 16 |
| IV | 6,1 | 10 |
| VI | 10,1 | 17 |
| VII | 7,6 | 13 |
| VIII | 31,0 | 52 |
| XI | 6,6 | 11 |
| XVIII | 4,8 | 8 |
| XIX | 7,3 | 12 |
| XXI | 2,1 | 3,5 |

Beispiel 2

Beispiel 1 wurde wiederholt, anstelle des Styrols wurde allerdings Methylmethacrylat eingesetzt.

| Initiator | Umsatz (g) | Umsatz (%) |
|---|---|---|
| I | 34 | 57 |
| II | 20,4 | 34 |
| III | 13,4 | 22 |
| VIII | 54 | 90 |
| X | 12,0 | 20 |
| XIX | 19,4 | 32 |
| XXI | 4,8 | 8 |

Beispiel 3

Beispiel 1 wurde wiederholt, anstelle des Styrols wurde allerdings Äthylacrylat eingesetzt.

| Initiator | Umsatz (g) | Umsatz (%) |
|---|---|---|
| I | 59 | 98 |
| III | 54 | 90 |
| VII | 51 | 85 |
| VIII | 57 | 94 |

Beispiel 4

Ein ungesättigter Polyester, hergestellt aus 11 Teilen Phthalsäureanhydrid, 47 Teilen Maleinsäureanhydrid und 42 Teilen Propylenglykol-1,2 bei 200 °C (Säurezahl 20, OH-Zahl 30, Viskosität bei 20 °C : 1 500 cP), wird 66 %ig in Styrol gelöst, mit 0,01 Teilen Hydrochinon stabilisiert. 100 Gew.-Tle. dieses Harzes werden mit jeweils 1,0 Teilen eines auf den Seiten 6-10 angegebenen Initiators oder Benzpinakol abgemischt. Eine Stunde nach der Zugabe des Initiators werden 20 g eines Harzansatzes in ein Reagenzglas von 16 mm Durchmesser gefüllt. Ein Eisen-Konstantan-Thermoelement, das mit einem Temperatur-Zeit-schreiber verbunden ist, wird 3 cm tief in das Harz eingetaucht und das zu 8 cm gefüllte Reagenzglas nach dem Einschalten des Meßgerätes in ein siedendes Wasserbad gestellt. Analog DIN 16 945 werden die Härtungszeiten $t_H$ (Zeit bis zum Erreichen der Spitzentemperatur minus Zeit bis zum Überschreiten der 65 °C-Linie) und die Spitzentemperatur ($T_m$) bestimmt.

Die Reststyrolgehalte wurden jodometrisch nach dem von B. Alt, Kunststoffe *54* (1964) beschriebenen Verfahren analysiert :

Bei den angegebenen Badtemperaturen ergeben sich folgende Werte :

Tabelle II

| Initiator | $t_H$ (min) | $T_m$ (°C) | Reststyrolgehalt (%) |
|---|---|---|---|
| I | 5,0 | 220 | 0,30 |
| III | 6,0 | 200 | 0,28 |
| IV | 12,0 | 195 | 0,40 |
| VI | 5,3 | 200 | 0,35 |
| VII | 6,0 | 205 | 0,45 |
| IX | 9,0 | 170 | 0,50 |
| XI | 9,5 | 190 | 0,40 |
| XIX | 6,4 | 240 | 0,25 |
| XXI | 18,0 | 190 | 0,55 |
| Benzpinakol | 11,0 | 205 | 0,70 |

Beispiel 5

Beispiel 4 wurde wiederholt ; als Heizbad wurde allerdings ein auf 140 °C thermostabilisiertes Ölbad verwendet.

| Initiator | $T_H$ (min) | $T_m$ (°C) |
|---|---|---|
| XIII | 13 | 200 |
| XIV | 18 | 190 |
| XVI | 8 | 200 |
| XVII | 7,2 | 210 |
| XVIII | 4 | > 250 |
| XX | 6,5 | 215 |
| XXI | 4,5 | > 250 |
| XXIV | 6,2 | 250 |

Beispiel 6

Ein ungesättigtes Polyesterharz, hergestellt aus 11 Teilen Phthalsäureanhydrid, 47 Teilen Maleinsäureanhydrid und 42 Teilen Propylenglykol-1,2 bis 200 °C (Säurezahl 20, OH-Zahl 30, Viskosität bei 20 °C : 1 500 cP), wird 66 %ig in Styrol gelöst und mit 0,01 Teilen Hydrochinon stabilisiert.

100 Teile dieses Harzes werden mit 1 Teil des Initiators VIII abgemischt und bei Raumtemperatur stehen gelassen. Nach 30 Minuten ist der Ansatz geliert, nach 4 Stunden ausgehärtet. Der Reststyrolgehalt beträgt nach 24 Stunden 5 %.

Beispiel 7

Ein 2 000 ml Rührautoklaven wurde mit 1 l Heptan und 1 g des Initiators VI bzw. VII beschickt. Die Lösung wurde mit Stickstoff gespült und anschließend bei Raumtemperatur 430 g Äthylen aufgepreßt. Der Autoklav wurde langsam bis auf 130 °C erhitzt. Dabei stieg der Reaktorinnendruck bis auf 450 bar, fiel aber im Verlaufe von 60 Minuten wieder auf 300 bzw. 280 bar ab. Der Autoklav wurde noch 2 Stunden bei 130 °C belassen, abgekühlt und entspannt. Nach dem Öffnen des Reaktors wurde das Äthylenpolymer mit der Heptanlösung entnommen, filtriert, gewaschen und bei 50 °C bis zur Gewichtskonstanz getrocknet.

Bei Verwendung von Initiator VI wurden 190 g Polymerisat mit einem Schmelzpunkt von 115-116 °C erhalten.

Bei Verwendung von Initiator VII wurden 170 g Polymerisat mit einem Fp 114-117 °C erhalten.

**Ansprüche**

1. Verfahren zur radikalischen Polymerisation bzw. Härtung von ein- oder mehrfach ungesättigten Verbindungen oder Gemischen, dadurch gekennzeichnet, daß man substituierte Weinsäure bzw. Weinsäurederivate der Formel (A) als Initiatoren verwendet :

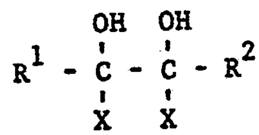

(A)

worin

$R^1$ und $R^2$ gleich oder verschieden, für einen gegebenenfalls substituierten Alkylrest mit 1-10 C-Atomen, einen Cycloalkylrest mit 5-7 C-Atomen, einen Aralkylrest mit 7-10 C-Atomen oder einen Arylrest mit 6-10 C-Atomen und

X für eine Carboxyl-, Cyano- oder Carboxylestergruppe stehen, in der sich die Alkoholkomponente von einem aliphatischen Alkohol mit 1-18 C-Atomen, cycloaliphatischen Alkohol mit 5-7 C-Atomen, einem araliphatischen Alkohol mit 7-10 C-Atomen, einem Phenol mit 6-10 C-Atomen oder Silanol mit 3-18 C-Atomen ableitet.

2. Mischungen bestehend aus radikalisch polymerisierbaren einfach oder mehrfach ungesättigten Verbindungen oder Gemischen und Polymerisationsinitiatoren, dadurch gekennzeichnet, daß die Mischungen 0,05-2 Gew.-%, bezogen auf die ungesättigten Verbindungen, substituierte Weinsäuren bzw. Weinsäurederivate der Formel (A) enthalten :

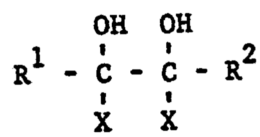

(A)

worin

$R^1$ und $R^2$ gleich oder verschieden, für einen gegebenenfalls substituierten Alkylrest mit 1-10 C-Atomen, einen Cycloalkylrest mit 5-7 C-Atomen, einen Aralkylrest mit 7-10 C-Atomen, oder einen Arylrest mit 6-10 C-Atomen und.

X für eine Carboxyl-, Cyano- oder Carboxylestergruppe stehen, in der sich die Alkoholkomponente von einem aliphatischen Alkohol mit 1-18 C-Atomen, cycloaliphatischen Alkohol mit 5-7 C-Atomen, einem araliphatischen Alkohol mit 7-10 C-Atomen, einem Phenol mit 6-10 C-Atomen oder Silanol mit 3-18 C-Atomen ableitet.

**Claims**

1. A process for the radical polymerisation or hardening of monounsaturated or polyunsaturated compounds or mixtures, characterised that the initiators used are substituted tartaric acid or tartaric acid derivatives of the formula (A).

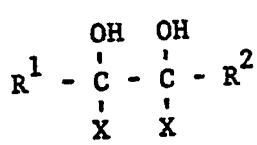

(A)

wherein

$R^1$ and $R^2$ are the same or different and each represents an optionally substituted $C_1$-$C_{10}$ alkyl, $C_5$-$C_7$ cycloalkyl, $C_7$-$C_{10}$ aralkyl or $C_6$-$C_{10}$ aryl radical, and

X represents a carboxyl, cyano or carboxylic ester group in which the alcohol component is derived from an aliphatic $C_1$-$C_{18}$, cycloaliphatic $C_5$-$C_7$ or araliphatic $C_7$-$C_{10}$ alcohol, a $C_6$-$C_{10}$ phenol or $C_3$-$C_{18}$ silanol.

2. Mixtures consisting of radically polymerisable mono- or polyunsaturated compounds or mixtures and polymerisation initiators, characterised in that the mixtures contain 0.05 to 2 % by weight, based on the unsaturated compounds, of substituted tartaric acids or tartaric acid derivatives of the formula (A).

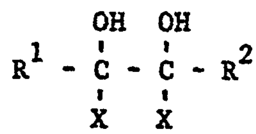

(A)

wherein

$R^1$ and $R^2$ are the same or different and each represents an optionally substituted $C_1$-$C_{10}$ alkyl, $C_5$-$C_7$ cycloalkyl, $C_7$-$C_{10}$ aralkyl or $C_6$-$C_{10}$ aryl radical, and

X represents a carboxyl, cyano or carboxylic ester group in which the alcohol component is derived from an aliphatic $C_1$-$C_{18}$, cycloaliphatic $C_5$-$C_7$ or araliphatic $C_7$-$C_{10}$ alcohol, a $C_6$-$C_{10}$ phenol or $C_3$-$C_{18}$ silanol.

**Revendications**

1. Procédé pour la polymérisation ou le durcissement radicalaire de composés ou mélange mono- ou polyinsaturés, caractérisé en ce que l'on utilise comme initiateurs des acides tartriques ou dérivés d'acides tartriques substitués de formule (A) :

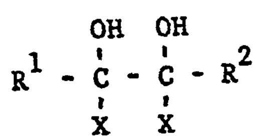

(A)

dans laquelle

$R^1$ et $R^2$ sont identiques ou différents et représentent chacun un reste alkyle en $C_1$-$C_{10}$ éventuellement substitué, un reste cycloalkyle en $C_5$-$C_7$, un reste arylalkyle en $C_7$-$C_{10}$ ou un reste aryle en $C_6$-$C_{10}$, et

X représente un reste carboxyle, cyano, ou un ester carboxylique, dans lequel le composant alcoolique est dérivé d'un alcool aliphatique en $C_1$-$C_{18}$ éventuellement substitué, d'un alcool cycloaliphatique en $C_5$-$C_7$, d'un alcool arylaliphatique en $C_7$-$C_{10}$, d'un phénol en $C_6$-$C_{10}$ ou d'un silanol en $C_3$-$C_{18}$.

2. Mélanges consistant en composés ou mélanges mono- ou polyinsaturés polymérisables par les radicaux libres et en initiateurs de polymérisation, caractérisés en ce que les mélanges contiennent 0,05-2 % en poids, par rapport aux composés insaturés, d'acides tartriques ou de dérivés d'acides tartriques substitués de formule (A) :

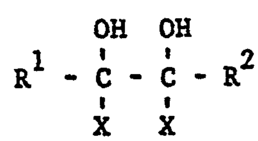

(A)

dans laquelle

$R^1$ et $R^2$ sont identiques ou différents et représentent chacun un reste alkyle en $C_1$-$C_{10}$ éventuellement substitué, un reste cycloalkyle en $C_5$-$C_7$, un reste arylalkyle en $C_7$-$C_{10}$ ou un reste aryle en $C_6$-$C_{10}$, et

X représente un reste carboxyle, cyano, ou ester carboxylique, dans lequel le composant alcoolique est dérivé d'un alcool aliphatique en $C_1$-$C_{18}$ éventuellement substitué, d'un alcool cycloaliphatique en $C_5$-$C_7$, d'un alcool arylaliphatique en $C_7$-$C_{10}$, d'un phénol en $C_6$-$C_{10}$ ou d'un silanol en $C_3$-$C_{18}$.